# EUROPEAN PATENT APPLICATION

(11) **EP 4 443 853 A1**
(43) Date of publication of application: **09.10.2024**
(21) Application number: 21966276.4
(22) Date of filing: 31.12.2021
(51) Int. Cl.: H04L 67/5682

(54) **POPULARITY-BASED CHANNEL-ASSOCIATED COLLABORATIVE CACHING METHOD IN ICN**

(30) Priority: 01.12.2021 CN 202111453387
(71) Applicant: Institute of Acoustics, Chinese Academy of Sciences, Haidian District Beijing 100190 (CN); Seanet (Suzhou) Network Technologies Co., Ltd., Jiangsu 215129 (CN)
(72) Inventor: HAN, Rui, Beijing 100190 (CN); LI, Yuanhang, Beijing 100190 (CN); YOU, Jiali, Beijing 100190 (CN); ZHU, Xiaoyong, Beijing 100190 (CN); WANG, Xu, Beijing 100190 (CN)
(74) Representative: Bryn Aarflot AS
(86) International application number: PCT/CN2021/143472
(87) International publication number: WO 2023/097856

(57) **Abstract**

The present invention discloses a popularity-based on-path collaborative caching method in an ICN network, implemented based on a content request sending end, ICN router nodes, and a content source server. The method includes: initiating, by the content request sending end, a content request; sending, by the content request sending end, a request packet to a data source node, where a header of the request packet includes a popularity field and a node information field, an ICN router node through which the request packet passes is allowed to read, modify, and forward the request packet, in a process of forwarding the request packet, the popularity field records a minimum popularity value of all cached content on the ICN router node through which the request packet passes, and the node information field records a node in which the minimum popularity value is located; and receiving, by the data source node, the request packet, performing comparison of a popularity value, and determining, according to a comparison result, whether to place a copy of the content on a data packet transmission path and construct a data packet, and performing, by an ICN router node through which the data packet passes in a process of forwarding the data packet, caching decision making.

## Description

### Related Application

This application claims priority to Chinese Patent Application No. 202111453387.2, filed on December 1, 2021, and entitled "POPULARITY-BASED ON-PATH COLLABORATIVE CACHING METHOD IN ICN NETWORK", which is incorporated herein by reference in its entirety.

### Technical Field

The present invention relates to the field of communication technologies, and in particular, to a popularity-based on-path collaborative caching method in an ICN network.

### Background

In today's society, Internet traffic is growing at an explosive rate. However, in an existing network structure with IP as the thin waist, new functions can only be implemented in the form of patching on this basis, resulting in limitations in the use of in-network caching, scalability, security, and other aspects in the conventional Internet.

In studies addressing the above issues, scholars have proposed the concept of information-centric networking (ICN). ICN abandons a conventional protocol stack structure with IP as the thin waist and adopts a protocol stack structure with an information name as the center. An ICN network architecture has two most important features. One feature is that routers have caching capabilities, and in-network caching can be implemented. The other feature is that each piece of content has a globally unique naming identifier, and routers can perform caching decision making according to the naming identifiers. In-network caching can reduce latency of accessing content by a user, relieve network congestion, and save network bandwidth. Content dissemination and routing according to naming can replace existing host-centric network transmission, support mobility, and support content multicast.

In-network caching is important content of the ICN, and an ICN caching router is the basic element for implementing in-network caching. Current ICN architectures use an LCE caching policy by default, that is, undifferentiated caching in all nodes. This simple policy only considers topological properties of a network and does not consider popularity properties of content, resulting in a low cache hit rate or low space utilization of a cache. Current related solutions are as follows:

Literature [1] *(A Popularity-Based Collaborative Caching Algorithm for Content-Centric Networking)* proposes a CCN-oriented popularity-based caching policy, to cache popular content in a cache node close to a user. The node maintains popularity information of cached content and content that is not cached but for which a content request is received. The paper preferentially considers the issue of latency of accessing content by a user but does not consider improving space utilization of a cache node.

Literature [2] *(An Almost-zero Latency Lightweight Mechanism for Caching Decision in ICN Content Router)* uses popularity information calculated by a node to perform source end decision making. The most popular content is cached at an edge node according to a hop count of data transmission, the second popular content is cached at a previous hop of the edge node, and the rest is deduced by analogy. The paper preferentially considers the issue of latency of accessing content by a user but does not consider space utilization of a cache node.

Literature [3] *(Design and Evaluation of Probabilistic Caching in Information-Centric Networking)* proposes a popularity-based distributed caching policy. Each node in the policy performs caching decision making, and caches delivered content with a particular probability. A value of a probability depends on popularity of content and a placement benefit of the content. In the paper, in a content transmission process, a node performs independent decision making, and determines, according to a probability, whether to cache content, which causes more computing overheads.

Literature [4] *(Proactive Caching Placement for Arbitrary Topology With Multi-Hop Forwarding in ICN)* uses a central controller to perform decision making and routing. Requested data needs to be centrally collected, and information including caching locations of content is periodically delivered to all routers. In the paper, probability information of content is acquired by using a controller, and a large amount of information needs to be exchanged between the controller and a cache node, which causes more communication overheads.

### Summary

An objective of the present invention is to overcome the deficiencies in the prior art, and provides a popularity-based on-path collaborative caching method in an ICN network.

To achieve the foregoing objective, the present invention provides a popularity-based on-path collaborative caching method in an ICN network, implemented based on a content request sending end, ICN router nodes, and a content source server. The method includes:
initiating, by the content request sending end, a content request;
sending, by the content request sending end, a request packet about requested content to a data source node that can provide a content service, where a header of the request packet includes a popularity field and a node information field, an ICN router node through which the request packet passes is allowed to read, modify, and forward the request packet, in a process of forwarding the request packet, the popularity field records a minimum popularity value of all cached content on the ICN router node through which the request packet passes, and the node information field records a node in which the minimum popularity value is located; and
receiving, by the data source node, the request packet, performing comparison of a popularity value, and determining, according to a comparison result, whether to place a copy of the content on a data packet transmission path and construct a data packet, and performing, by an ICN router node through which the data packet passes in a process of forwarding the data packet, caching decision making in combination with a status of the current node and content of the node information field.

As an improvement to the foregoing method, the data source node is a source server node or an ICN router node, and an address of the data source node is provided by a name resolution system.

As an improvement to the foregoing method, that in a process of forwarding the request packet, the popularity field records a minimum popularity value of all cached content on the ICN router node through which the request packet passes, and the node information field records a node in which the minimum popularity value is located specifically includes:
in the process of forwarding the request packet, receiving, by the ICN router node, the request packet, and determining whether the popularity field carried in the request packet is greater than a minimum popularity value of cached content on the current node; and if yes, replacing the popularity field carried in the request packet with the minimum popularity value of the cached content on the current node, replacing the node information field carried in the request packet with information of the current node, and then forwarding the modified request packet to a next ICN router node; or if not, forwarding, by the current node, the request packet to a next ICN router node directly without replacing information in the request packet; and
repeating the process of forwarding the request packet, until the request packet reaches the data source node that caches the content, where in this case, the popularity field records the minimum popularity value of all the cached content on the ICN router node through which the request packet passes, and the node information field records the node in which the minimum popularity value is located.

As an improvement to the foregoing method, the popularity value is a quantity of content requests counted within a particular period T by an ICN router node in which the content is located or by the content source server.

As an improvement to the foregoing method, the receiving, by the data source node, the request packet, performing comparison of a popularity value, and determining, according to a comparison result, whether to place a copy of the content on a data packet transmission path and construct a data packet specifically includes:
receiving, by the data source node, the request packet, and comparing the popularity field in the request packet with a popularity value of the requested content on the current node, where
if the popularity field in the request packet is less than the popularity value of the requested content on the current node, the copy of the content needs to be placed on the data packet transmission path, and a data packet with a header including a popularity field and a node information field is constructed, where the popularity field records a popularity value of transmitted content on the data source node, and content of the node information field is consistent with the content of the node information field of the request packet, and is location addressing information of an ICN router node that is to cache the copy of the content; or
if the popularity field in the request packet is not less than the popularity value of the requested content on the current node, the copy of the content does not need to be placed on the data packet transmission path, and a data packet with both a popularity field and a node information field being empty is constructed.

As an improvement to the foregoing method, the performing, by an ICN router node through which the data packet passes in a process of forwarding the data packet, caching decision making in combination with a status of the current node and content of the node information field specifically includes:
receiving, by the ICN router node through which the data packet passes, the data packet in the process of forwarding the data packet, performing comparison to determine whether information of the current node is consistent with the node information field carried in the data packet; and if yes, caching the copy of the content according to a caching space of the current node, and then forwarding the data packet to a next ICN router node; or if not, directly forwarding the data packet to a next ICN router node; and
repeating the process of forwarding the data packet, until the data packet reaches the content request sending end.

As an improvement to the foregoing method, the caching the copy of the content according to a caching space of the current node specifically includes:
if there is a caching space, caching the copy of the content, and setting a corresponding popularity value to 0; or if there is no caching space, replacing content with a minimum popularity value in the current node with the copy of the content.

As an improvement to the foregoing method, content newly cached by the ICN router nodes within a period T is not counted in a comparison range of a minimum popularity value of content on the ICN router nodes in a current period, and content starts to be counted in the comparison range from a period T+1.

As an improvement to the foregoing method, the location addressing information indicates specific information of an ICN router node that performs a content caching operation, and is represented by a network hop count from the ICN router node to the data source node, or is represented by a globally unique identifier of the ICN router node.

Compared with the prior art, the advantages of the present invention are as follows:

The caching method in the present invention is oriented to an ICN caching network, and is a distributed caching placement method. In the caching method in the present invention, a caching decision making step is moved up to a request packet transmission phase, and does not require additional communication overheads, so that space utilization of a cache node in an ICN network can be improved, average popularity of cached content can be improved, a caching hit rate can be increased, and latency of obtaining content by a user can be reduced.

### Brief Description of Drawings

FIG. 1 is a flowchart of forwarding a request packet;
FIG. 2 is a flowchart of forwarding a data packet; and
FIG. 3 is an example diagram of a specific implementation, where FIG. 3(a) shows an initial state of an ICN caching network, FIG. 3(b) shows that content c3 is cached at a node C, previously cached content c5 is replaced, and FIG. 3(c) shows that content c3 is cached at a node B, and previously cached content c4 is replaced.

### Description of Embodiments

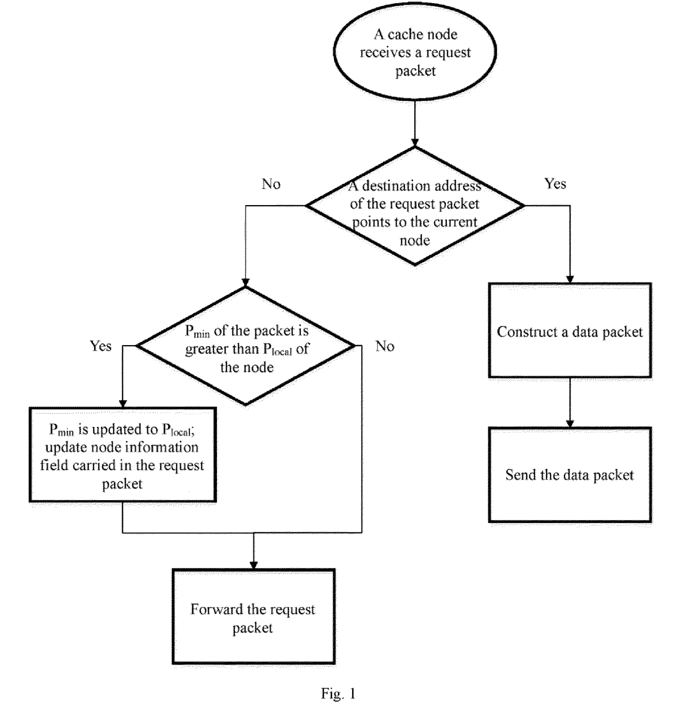

The present invention provides a popularity-based on-path collaborative caching method in an ICN network, involving ICN router nodes and a data source node. The method mainly includes the following steps.
(1) A header of an ICN request packet carries a popularity field and a node information field. An ICN router node through which the request packet passes is allowed to read and modify the request packet. In a process of forwarding the request packet, the popularity field records a minimum popularity value of all cached content on the ICN router node through which the request packet passes. The node information field is used for labeling a node in ICN router nodes through which the request packet passes that caches content with a minimum popularity value. FIG. 1 is a flowchart of forwarding the request packet.

Preferably, the ICN router nodes receives the request packet that carries the popularity field and the node information field, compares a minimum popularity value of cached content on the current node with the popularity field in the request packet, determines, according to the comparison result, whether to replace the popularity field and the node information field in the request packet, and continues to forward the request packet.

Preferably, the data source node receives the request packet, compares the popularity field carried in the request packet with popularity of requested content in the current node, determines, according to a comparison result, whether to place a copy of the content on a data packet transmission path, then constructs a data packet that carries the popularity field and the node information field, and returns the data packet to a requester. A value of the popularity field in the data packet is set to the popularity of the requested content in the current node value. A value of the node information field is set to a value of the node information field in the request packet received by the current node.

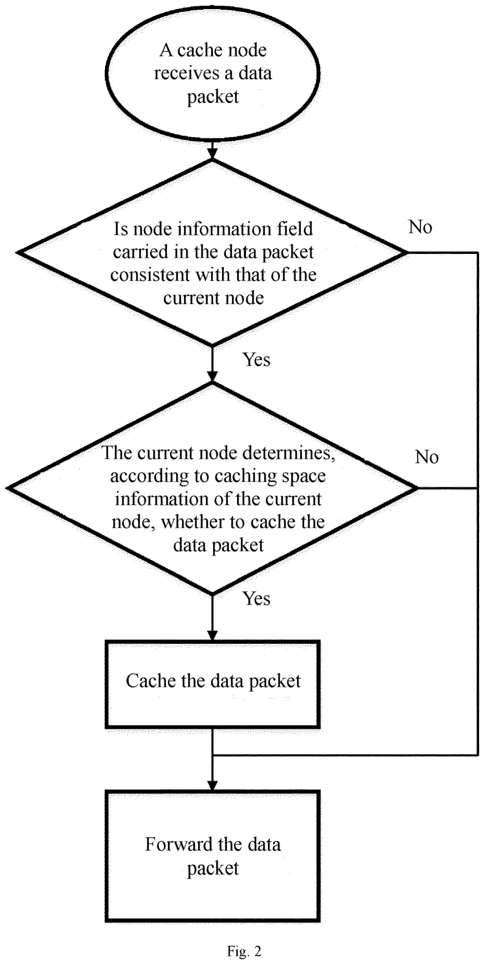

(2) The data source node constructs an ICN data packet. A header of the packet carries a popularity field and a node information field. The popularity field records popularity of transmitted content on the data source node. The node information field records location addressing information of an ICN router node that is to cache the transmitted content. In a process of forwarding the data packet, an ICN router node on a forwarding path performs caching decision making in combination with a status of the current node and content of the field. FIG. 2 is a flowchart of forwarding a data packet.

Preferably, the ICN router nodes receives the data packet, performs comparison to determine whether the information of the current node is consistent with the node information field carried in the data packet. If yes, the current node further determines, according to caching space information of the current node, whether to cache the data packet, and then the current node forwards the data packet. If not, the current node directly forwards the data packet.

Preferably, the ICN router nodes calculates popularity of all cached content on the current node, and at the same time records a minimum popularity value of all cached content. A popularity value of the content is represented by a quantity of content requests counted within a particular period T by the node. However, a representation manner is not limited to this manner. For content cached on a node in a network for the first time, initial popularity of the content may be obtained by assigning a value to a popularity field of the content in the data packet, or is set to a default initial value.

Preferably, an ICN router node records a minimum popularity value of cached content. For an ICN router node with an idle caching space, a minimum popularity value of the ICN router node is recorded as 0. Content newly cached by the ICN router nodes within a period T is not counted in a comparison range of a minimum popularity value of content on the ICN router nodes in a current period, and instead content starts to be counted in the comparison range from a period T+1.

Preferably, the location addressing information indicates specific information of an ICN router node that performs a content caching operation, and may be represented by a network hop count from the node to the data source node, or may be represented by a globally unique identifier of the node. However, a representation manner is not limited to the two manners.

Preferably, the data source node includes a source server node that can provide a content service and an ICN router node.

Preferably, in the process of forwarding the request packet, after receiving the request packet, the ICN router node compares the popularity field carried in the request packet with the minimum popularity value of the cached content on the current node. If the minimum popularity value of the cached content on the current node is smaller, the popularity field carried in the request packet is replaced with the minimum popularity value of the cached content on the current node, and the node information field carried in the request packet is replaced with the information of the current node, and then the request packet is forwarded. Otherwise, the current node directly forwards the request packet without replacing information in the request packet.

Preferably, the data source node receives the request packet, and compares the popularity field carried in the request packet with a popularity of popularity that is calculated by the data source node and that is of the requested content. When the popularity of the requested content is higher, the data source node constructs a data packet that carries a popularity field and a node information field. When the popularity field carried in the request packet is not less than the popularity of the requested content, the data source node constructs a data packet that does not carry an optional field.

The technical solutions of the present invention are described below in detail with reference to the accompanying drawings and the embodiments.

### Embodiment 1

Embodiment 1 of the present invention provides a popularity-based on-path collaborative caching method in an ICN network, involving the following entities: a content request sending end, a name resolution system, ICN router nodes, and a content source server. The sending end and a receiving end include physical entities such as servers, PCs, and mobile phones. The name resolution system provides a mapping relationship between content and an address. A cache node is an ICN router node, and has functions of storing content, forwarding a packet, calculating popularity of content, and the like.

An ICN router node in which content with minimum popularity is located is selected on a transmission path of a content request packet as a cache placement alternate node for requested content. The data source node or a hit cache node calculates the popularity of the requested content, includes popularity of the content in a content data packet, and returns the content data packet to a the user. On a transmission path of the content data packet, if minimum popularity of cached content on the cache placement alternate node is lower than the popularity of the requested content carried in the packet, the node caches a copy of the requested content.

The ICN router nodes calculates popularity of cached content on the current node A popularity value of the content is represented by a quantity of content requests counted within a particular period T by the node. For content cached on a node in a network for the first time, initial popularity of the content may be set to 1. The cache node records the popularity of the cached content, when a request has a hit in the cache node, corresponding content popularity recorded by the node is increased by 1. In a new period, popularity of all cached content is initialized to 1.

In addition, the cache node records a minimum popularity value of cached content. For a node with an unfilled caching space, a minimum popularity value of the node is recorded as 0. Content newly cached by the cache nodes within a period T is not counted in a comparison range of a minimum popularity value on the nodes in a current period, and instead content starts to be counted in the comparison range from a period T+1.

The ICN network may further configure a name resolution system. The name resolution system maintains and resolves a mapping relationship between intra-domain cached content and an address of content that can a provide service. When content on a source server provides a service or when a caching router node caches content, a registration request is sent to the resolution system. When the caching router node deletes cached content, a deregistration request is sent to the resolution system. When the user requests a piece of content, a resolution request is first sent to the resolution system. The resolution request returns an address list corresponding to the content. According to a quantity of addresses in the address list, the user may obtain a quantity of copies of the content in a resolution domain.

Because the user can obtain copy quantity information, the request packet may further carry a copy quantity field. The copy quantity field is used to adjust popularity of content corresponding to the request packet at a hit node of the request packet. When the content is hit by a request, the popularity of the requested content is calculated again according to the value of the copy quantity field carried in the request packet. When the quantity of copies increases, the popularity value of the requested content calculated by the hit node is correspondingly reduced.

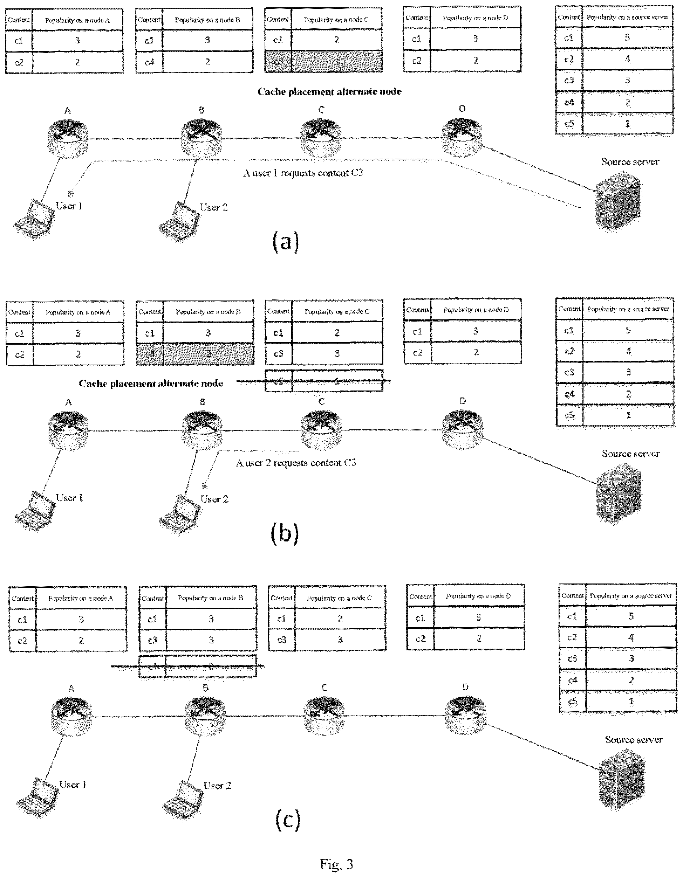

The popularity-based on-path collaborative caching method in an ICN network is described below with reference to FIG. 3. FIG. 3(a) shows an initial state of an ICN caching network. Nodes A, B, C, and D are ICN router nodes, and are responsible for information storage and forwarding of the network.

It is assumed that a capacity of each caching router can only cache two pieces of contents, and content c1, c2, c3, c4, and c5 have a same size. The user 1 initiates a request for the content c3 from a moment, and a name resolution system returns an address of a source server. In this case, the user 1 continues to send a request packet for the content c3 to the source server. The request packet records node addresses corresponding to content with minimum popularity cached in nodes through which the request packets passes. In this case, c5 cached in the node C has minimum popularity, being 1, the popularity is recorded in the request packet, and at the same time the node C is selected as a cache placement alternate node. When the request packet reaches the source server, the source server compares popularity of the requested content c3 with a minimum path popularity value recorded in the request packet. Because c3 has higher popularity, the source server determines to cache the content c3 at the cache placement alternate node, and constructs a data packet and returns the data packet to the user 1.

In FIG. 3(b), because the node C has cached the content c3, the previously cached content c5 is replaced. At a subsequent moment, the user 2 initiates a request to the content c3. The name resolution system returns addresses of the node C and the source server. Because the node C is closer, the user 2 continues to send the request packet for the content c3 to the node C. The request packet records node addresses corresponding to content with minimum popularity cached in nodes through which the request packets passes. In this case, c4 cached in the node B has minimum popularity, being 2, the popularity is recorded in the request packet, and at the same time the node B is selected as a cache placement alternate node. When the request packet reaches the node C, the node C compares popularity of the requested content c3 with a minimum path popularity value recorded in the request packet. Because c3 has higher popularity, the node C determines to cache the content c3 at the cache placement alternate node, and constructs a data packet and returns the data packet to the user 2.

In FIG. 3(c), because the node B has cached the content c3, the previously cached content c4 is replaced.

As can be seen from the foregoing example, the present invention provides a popularity-based on-path collaborative caching method in an ICN network, to make popular content gradually spread to locations of nearby users, and average popularity of content on a path is increased, to improve a caching hit rate of the network.

Finally, it should be noted that the foregoing embodiments are merely intended for describing the technical solutions of the present invention rather than limiting the present invention. Although the present invention is described in detail with reference to the embodiments, persons of ordinary skill in the art should understand that they may still make modifications or equivalent replacements to the technical features of the present invention without departing from the spirit and scope of the technical solutions of the technical solutions of the present invention. These modifications or equivalent replacements shall all fall within the scope of the claims the present invention.

## Claims

1. A popularity-based on-path collaborative caching method in an ICN network, implemented based on a content request sending end, ICN router nodes, and a content source server, wherein the method comprises:
initiating, by the content request sending end, a content request;
sending, by the content request sending end, a request packet about requested content to a data source node that can provide a content service, wherein a header of the request packet comprises a popularity field and a node information field, an ICN router node through which the request packet passes is allowed to read, modify, and forward the request packet, in a process of forwarding the request packet, the popularity field records a minimum popularity value of all cached content on the ICN router node through which the request packet passes, and the node information field records a node in which the minimum popularity value is located; and
receiving, by the data source node, the request packet, performing comparison of a popularity value, and determining, according to a comparison result, whether to place a copy of the content on a data packet transmission path and construct a data packet, and performing, by an ICN router node through which the data packet passes in a process of forwarding the data packet, caching decision making in combination with a status of the current node and content of the node information field.

2. The popularity-based on-path collaborative caching method in an ICN network according to claim 1, wherein the data source node is a source server node or an ICN router node, and an address of the data source node is provided by a name resolution system.

3. The popularity-based on-path collaborative caching method in an ICN network according to claim 1 or 2, wherein that in a process of forwarding the request packet, the popularity field records a minimum popularity value of all cached content on the ICN router node through which the request packet passes, and the node information field records a node in which the minimum popularity value is located specifically comprises:
in the process of forwarding the request packet, receiving, by the ICN router node, the request packet, and determining whether the popularity field carried in the request packet is greater than a minimum popularity value of cached content on the current node; and if yes, replacing the popularity field carried in the request packet with the minimum popularity value of the cached content on the current node, replacing the node information field carried in the request packet with information of the current node, and then forwarding the modified request packet to a next ICN router node; or if not, forwarding, by the current node, the request packet to a next ICN router node directly without replacing information in the request packet; and
repeating the process of forwarding the request packet, until the request packet reaches the data source node that caches the content, wherein in this case, the popularity field records the minimum popularity value of all the cached content on the ICN router node through which the request packet passes, and the node information field records the node in which the minimum popularity value is located.

4. The popularity-based on-path collaborative caching method in an ICN network according to claim 3, wherein the popularity value is a quantity of content requests counted within a particular period T by an ICN router node in which the content is located or by the content source server.

5. The popularity-based on-path collaborative caching method in an ICN network according to claim 1 or 2, wherein the receiving, by the data source node, the request packet, performing comparison of a popularity value, and determining, according to a comparison result, whether to place a copy of the content on a data packet transmission path and construct a data packet specifically comprises:
receiving, by the data source node, the request packet, and comparing the popularity field in the request packet with a popularity value of the requested content on the current node, wherein
if the popularity field in the request packet is less than the popularity value of the requested content on the current node, the copy of the content needs to be placed on the data packet transmission path, and a data packet with a header comprising a popularity field and a node information field is constructed, wherein the popularity field records a popularity value of transmitted content on the data source node, and content of the node information field is consistent with the content of the node information field of the request packet, and is location addressing information of an ICN router node that is to cache the copy of the content; or
if the popularity field in the request packet is not less than the popularity value of the requested content on the current node, the copy of the content does not need to be placed on the data packet transmission path, and a data packet with both a popularity field and a node information field being empty is constructed.

6. The popularity-based on-path collaborative caching method in an ICN network according to claim 5, wherein the performing, by an ICN router node through which the data packet passes in a process of forwarding the data packet, caching decision making in combination with a status of the current node and content of the node information field specifically comprises:
receiving, by the ICN router node through which the data packet passes, the data packet in the process of forwarding the data packet, performing comparison to determine whether information of the current node is consistent with the node information field carried in the data packet; and if yes, caching the copy of the content according to a caching space of the current node, and then forwarding the data packet to a next ICN router node; or if not, directly forwarding the data packet to a next ICN router node; and
repeating the process of forwarding the data packet, until the data packet reaches the content request sending end.

7. The popularity-based on-path collaborative caching method in an ICN network according to claim 6, wherein the caching the copy of the content according to a caching space of the current node specifically comprises:
if there is a caching space, caching the copy of the content, and setting a corresponding popularity value to 0; or if there is no caching space, replacing content with a minimum popularity value in the current node with the copy of the content.

8. The popularity-based on-path collaborative caching method in an ICN network according to claim 7, wherein content newly cached by the ICN router nodes within a period T is not counted in a comparison range of a minimum popularity value of content on the ICN router nodes in a current period, and content starts to be counted in the comparison range from a period T+1.

9. The popularity-based on-path collaborative caching method in an ICN network according to claim 5, wherein the location addressing information indicates specific information of an ICN router node that performs a content caching operation, and is represented by a network hop count from the ICN router node to the data source node, or is represented by a globally unique identifier of the ICN router node.
